# EUROPEAN PATENT SPECIFICATION

(11) **EP 1 772 677 B1**
(45) Date of publication and mention of the grant of the patent: **13.08.2014**
(21) Application number: 06076827.2
(22) Date of filing: 03.10.2006
(51) Int. Cl.: F24D 3/12, F24D 19/10, F24D 3/10

(54) **Monobloc multifunction valve for supplying and controlling a fluid for radiating panels**
Monoblock-Multifunktionsventil zum Beaufschlagen und Steuern eines Fluids für Plattenheizkörper
Soupage monobloc à plusieurs fonctions pour fournir et commander un fluide pour des radiateurs à plaques

(30) Priority: 07.10.2005 IT MI20051886
(43) Date of publication of application: 11.04.2007
(73) Proprietor: WATTS INDUSTRIES ITALIA S.r.l., Bolzano (IT)
(72) Inventor: Ferretti, Umberto, Via della Mostra 3, Bolzano (IT)
(74) Representative: Raimondi, Margherita

(56) References cited:
- EP-A- 0 548 389
- EP-A- 1 065 447
- FR-A- 2 727 195
- US-A- 4 027 691
- US-A1- 2002 033 420

## Description

The present invention relates to a multifunction valve with monobloc body for distributing and regulating water for radiating panels.

In the heating sector a known technology consists in heat diffusion by means of radiating panels composed of pipes which are, for example, made of crosslinked polyethylene and are arranged in the floor in the form of special insulating radiating panels which are able to transmit the heat by means of irradiation and spread said heat with a high degree of uniformity over an area of a few centimetres from the ground up to a height of about 2 or 3 metres.

It is also known that these radiating panels must perform the circulation of hot water at a temperature which is not in excess of 50°C in order to prevent damage to the floor and ensure optimum comfort and efficiency; this requirement conflicts, however, with the fact that the hot water supplied by a boiler reaches the points where it is distributed to the individual users at a temperature of about 70°C.

In addition to this, in practice it occurs that the network for distributing the heating hot water to the radiating panels is combined with networks for supplying hot water to normal heating elements of the radiator type which instead require water at a higher temperature.

It is also known that, in order to regulate, in these conditions, the temperature of the water supplying the radiating panels, special hydraulic circuits have been designed such as to mix the (cold) return water from the radiating panels of the heating system with the (very hot) delivery water from the boiler, so as to keep the water of the radiating panels at the predefined temperature for use.

These control circuits require the use of numerous components such as special mixer valves, a large number of assembly components such as pipes, unions and the like of the standard type or specially modified and suitably connected so as to produce the desired technical effect.

Although performing their function, said circuits therefore result in the need for onerous preparation, assembly and regulating operations which are difficult from the technical point of view and costly from an economic point of view.

**An exemple of such prior art is disclosed into** FR 2 727 195. This document discloses the features of the preamble of the claim 1.

The technical problem which is posed, therefore, is to provide a multifunction valve which is particularly suitable for being arranged between the risers for delivery/return of the boiler water and the circuits for supplying heating radiating panels, so as to allow automatic regulation of the temperature of the water which circulates inside them. It is also required that the valve should ensure so-called "intrinsic safety" of the circuit, namely control of the temperature which may allow, also in the event of malfunction of the normal detection/control means, the temperature to be kept below a predefined threshold, in order to prevent consequent damage to the floor as a result of an excessively high increase in the temperature of the radiating panels. In connection with this problem it is required, moreover, that this valve should have small dimensions, be easy and inexpensive to produce and assemble and be able to be installed in loco under any conditions without the need for excessive adaptation and be able to be used also for heating systems of the mixed type with radiating panels and radiators.

These results are achieved according to the present invention by a multifunction valve with monobloc body according to the characteristic features of Claim 1.

The present invention relates furthermore to a hydraulic circuit with a multifunction valve according to the characteristic features of Claim 12.

Further details may be obtained from the following description of a non-limiting example of embodiment of the subject of the present invention provided with reference to the accompanying drawings in which:
- Figure 1 shows a perspective view of the monobloc body of the multifunction valve according to the present invention;
- Figure 2 shows a view, from the supply side, of the valve body according to Fig. 1;
- Figure 3 shows a schematic cross-section along the plane indicated by III-III in Fig. 2;
- Figure 4 shows a schematic cross-section along the plane indicated by IV-IV in Fig. 3;
- Figure 5 shows a side view of the valve according to the present invention inserted in a complete heating circuit;
- Figure 6a,6b show partially sectioned views of the valve part which ensures the intrinsic safety in the normal operating condition and safety condition, respectively;
- Figure 7 shows a functional diagram of a circuit with valve according to the present invention for supplying radiating panels; and
- Figure 8 shows a functional diagram of a circuit with valve according to the present invention for supplying heating radiating panels and radiators.

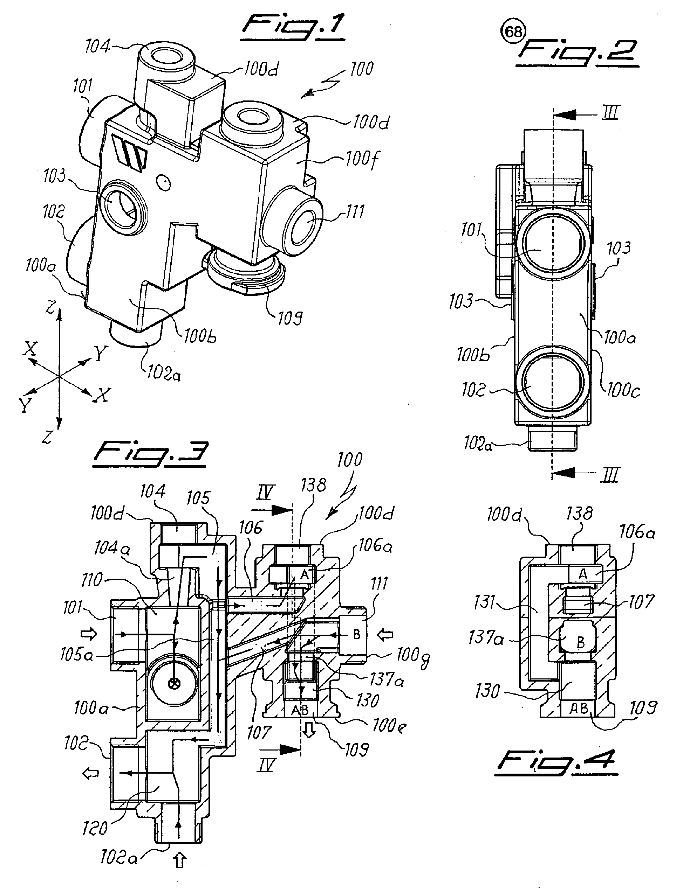

As shown in Figs. 1 to 4, assuming solely for the sake of convenience of the description three reference axis, i.e. a longitudinal axis X-X, transverse axis Y-Y and vertical axis Z-Z and an upstream-to-downstream orientation in the direction of the fluid flow from the inlet of the boiler hot water to the outlet of the mixed water for the radiating panels, the monobloc body 100 of the multifunction valve according to the present invention comprises:
- ) a **first** inlet aperture 101 and a **first** return aperture 102 arranged in the upstream side 100a for entry/outflow of the water going to/coming to/from the risers for delivery/return of the boiler water;
- ) said **first** inlet aperture 101 emerges inside a delivery chamber 110 substantially extending in the vertical direction Z-Z, communicating with the exterior via two transverse apertures 103, coaxially and respectively formed on opposite side faces 100b and 100c of the body 100;
- ) said **first** return aperture 102 emerges inside a respective return chamber 120 which is also connected to the aperture 102a for return of the cold water from the downstream hydraulic circuit for distribution to radiators of the conventional type;
- ) a **first** seat 104 formed on the upper side 100d and able to engage with a **first** regulating instrument 1000 described below; said seat **first** emerges inside a duct 104a, with a substantially vertical axis, connected to the delivery chamber 110 and, via a branch 105, also to the return chamber 120, in this way forming a branch section c-d having the function of a disengageable hydraulic decoupler, as will become clear with reference to operation of the valve; the branch 105 in turn communicates with exterior via two transverse apertures 105a, coaxially and respectively formed on the opposite side faces 100b and 100c of the body 100;
- ) the branch 105 is connected to two further longitudinal ducts, i.e. a **first** duct 106 for delivery and **first** duct 107 for return, respectively, to/from a mixer valve able to keep at the predefined temperature the water AB supplied to the **second** delivery aperture 109 for the radiating panels (not shown), formed on the bottom horizontal side 100e of the valve body; in greater detail (Fig. 4) said mixer valve comprises:
   - ) a mixing chamber 130 into which the following converge:
      · a vertical delivery duct 131, the other end of which is connected to a section 106a of the **first** longitudinal delivery duct 106 for the hot water A;
      . a branch 137a of the **first** longitudinal duct 107 for return of the cold water B which enters into the valve body through the **second** return aperture 111 formed on the vertical downstream side 100f of the valve body;
      · a **second** seat 138 formed on the upper side 100d of the valve body and able to seat a second instrument 2000 for regulating the delivery of hot water A, better described below.

In order to obtain the intrinsic safety function of the valve, it is envisaged moreover that the aperture Lm of the **first** delivery duct 106 is equal to the aperture of Lr of the **first** return duct 107 and that said apertures Lm=Lr constitute between 45% and 65% of the **second** aperture L109 of the **second** delivery 109 for the mixed water AB.

Preferably Lm=Lr constitute between 50% and 58% of the said aperture L109.

In addition to this, it is envisaged that the aperture L137a of the branch 137a of the **first** longitudinal return duct 107 constitutes between 40 and 55%, preferably between 42-48%, of the said aperture L109 of the **second** delivery 109 for the mixed water AB.

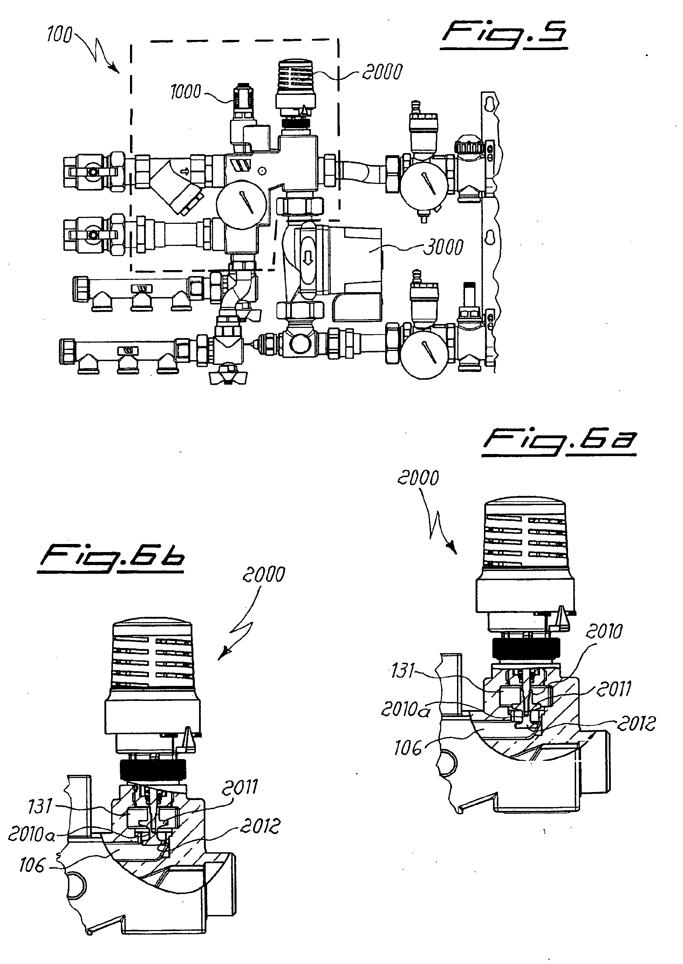

As shown in Fig. 5, a single-body multifunction valve according to the invention comprises a valve body as described above completed by:
- ) a flowmeter 1000 inserted in the appropriate **first** seat 104 and able to regulate the flowrate of the hot water drawn from the delivery riser 1 of the general system so as to keep the latter in equilibrium depending on the various user loads; and
- ) a pre-regulation thermostatic valve 2000 able to determine the greater/lesser opening of the duct supplying the hot water A to the mixing chamber 130 of the mixer valve.

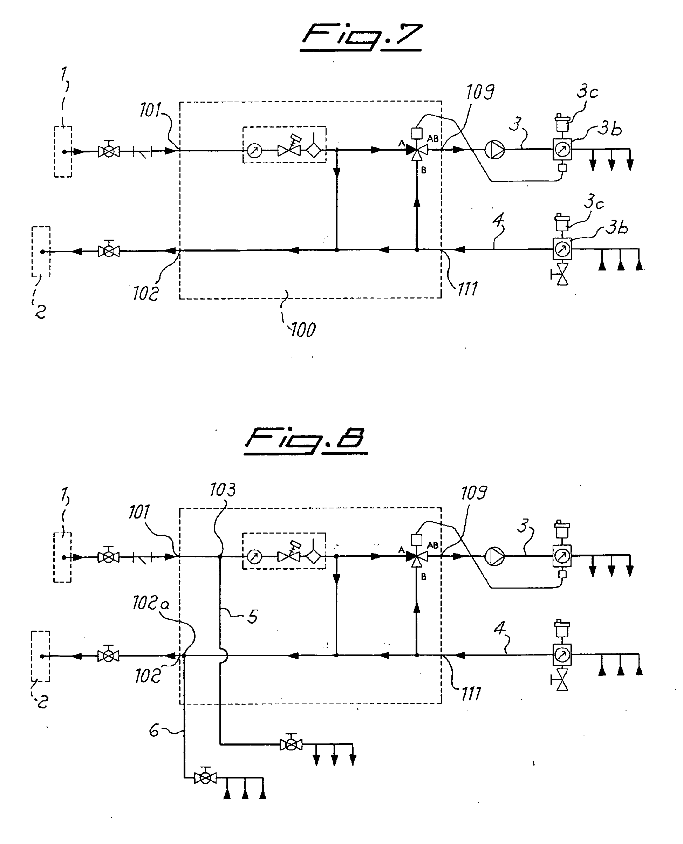

Said thermostatic valve 2000 comprises a shaft 2010 operated displaceably by means of conventional actuators (and therefore not described in detail) from a fully open position into a fully closed position of the **first** duct 106 for delivery to the mixing chamber 130, the greater or lesser opening of the duct being controlled by means of a temperature sensor 3b (Fig. 7) arranged downstream of the mixing chamber 130 and calibrated so as to maintain a predefined temperature not greater than 50°C.

The free end 2010a of the shaft 2010 of the valve 2000 comprises a first obturator 2011 and a second obturator 2012 arranged downstream of the first obturator, said obturators being able to intervene in such a way that, in normal working conditions, the first obturator 2011 causes, depending on the programmed temperature and the set pre-regulation, a suitable flowrate of hot water A, while, in the event of breakage of the temperature control system, the shaft 2010 is recalled by a spring, not shown, so as to cause activation of the second obturator 2012 which causes closing of the delivery so as to prevent an increase in temperature in the radiating panels downstream.

The outer diameter of the second obturator 2012 is smaller than the inner diameter of the **first** delivery duct 106 which is shut off by an amount such as to ensure the passage of a flow of hot water A such as to maintain a minimum temperature (e.g. 8°C) for preventing the water inside the pipes from freezing.

In this way, with the sections of the ducts of the valve body as described above and assuming the flowrate of the mixed water AB to be 100%, it is possible to achieve a ratio (A/AB) of the flowrates for hot water A and mixed water AB which is between 20 and 25% and a ratio (B/AB) for cold water B returning from the branch duct 137a and mixed water AB which is between 80 and 75%, thereby achieving the said desired intrinsic safety of the valve.

As shown, it is envisaged moreover inserting a pump 3000 between the **second** delivery aperture 109 and the pipes 3 supplying the radiating panels, able to render the circulation of the downstream secondary circuit independent of the primary circuit.

During assembly of the valve it will also be possible to install said valve with a right-hand or left-hand orientation owing to:
- ) the double apertures 103 of the delivery chamber 110 which will be connected, respectively, to a thermometer 4000 for measuring the temperature of the boiler water and to the delivery 5 of the radiator circuit;
- ) the double apertures 105a of the branch 105 of the hydraulic decoupler, one of which always remains accessible to the operator for disengaging the branch section c-d of the hydraulic decoupler, if necessary.

Figure 7 shows a hydraulic circuit for supplying and controlling radiating panels, which is optimized by means of a monobloc multifunction valve according to the present invention connected via the **first** apertures 101 and 102 on the upstream side to the risers 1 and 2 for delivery/return of the water to/from the boiler and via the **second** apertures 109 and 111 on the downstream side to the delivers 3 return 4 of the radiating panels.

As shown, the delivery branch section 3 has, arranged along it, a circulating device 3a essentially consisting of the three-speed pump 3000 according to Fig. 5 and a thermometer 3b connected to a breather valve 3c formed by float-type discharger, which are able to keep the circuit air-free.

A similar assembly consisting of thermometer 3b / float discharger 3c is arranged along the return circuit 4 so as to keep the entire circuit air-free.

Fig. 8 shows a hydraulic circuit similar to those shown in Fig. 7 in which the delivery/return branches 5 and 6 of the radiator circuit are also envisaged, these being connected to the single-body valve via the respective apertures 103 and 102a.

It is therefore clear how, as a result of the multifunction valve with monobloc body for controlling the supply of radiating panels according to the invention, it is possible to reduce the installation costs and overall dimensions and provide with great ease and at a very low cost complex hydraulic circuits with both a right-hand and left-hand inlet/outlet and with an intrinsic safety system of the mechanical type which is not subject to wear and/or modifications in the calibration and is therefore able to ensure maintenance-free operation for very long periods of time. Numerous variations may be made to the practical design of the various components of the valve and the orientation indicated by way of example in the above description, without altering the functional concept of the assembly and without departing from the scope of protection defined by the claims which follow.

## Claims

1. Multifunction valve for supplying and controlling the water (AB) for radiating panels, **whereby it comprises a monobloc body (100), said monobloc body (100)** comprising:
- at least **a first** delivery aperture (101), a **first** return aperture (102) for entry/outflow of the water going to/coming from the risers for delivery/return of the boiler water (A);
- at least **a second** delivery aperture (109) and a **second** return aperture (111) for entry/outflow of the water going to/coming from the radiating panels,
- *a first seat (104) suitable for engagement with a* **first** *instrument (1000) for regulating the flowrate of the water drawn from the riser (1) of the boiler hot water (A) ;*
- **a** mixing chamber (130) of a **mixer** valve for mixing the delivery water (A) and return water (B) so as to keep at **the** predefined temperature the water (AB) supplied to the **second** delivery aperture (109) of the radiating panels,
- *said monobloc body (100) has, formed thereon, a second seat (138) suitable for seating a* **second** *instrument (2000) for regulating the delivery of hot water (A) to said mixing chamber (130)*
**whereby:**
- said **first** delivery aperture (101) and **first** return aperture (102) for entry/outflow of the water emerge inside a respective delivery chamber (110) and return chamber (120) which are connected together by means of a branch (105)
- said branch (105) is connected to **a first** longitudinal duct for delivery (106) and **a first longitudinal duct for** return (107), respectively, to/from said mixing chamber (130);
*said mixing chamber (130) **being** connected to a first end of a vertical delivery duct (131)*, *the other end of which is connected to a section (106a) of the **first** longitudinal duct **for** delivery (106) for the hot water (A) and a branch (137a) of the **first** longitudinal duct (107) for return of the cold water (B) which enters into the valve body through said second return aperture (111)*;
**said multifunction valve comprising also said first instrument (1000) being a flowmeter (1000) coaxially inserted in said first seat (104) of the valve body;**
**said multifunction valve comprising also said second instrument (2000) being a pre-regulation thermostatic valve (2000) coaxially inserted in said second seat (138) of said body and able to close off the aperture of said section (106a) of the longitudinal duct (106) for delivery of the hot water (A) to the mixing chamber valve so as to cause greater/lesser opening of the said duct,**
**characterized in that**
**said pre-regulation thermostatic valve (2000)** comprises a shaft (2010), the free end (2010a) of which comprises at least one first obturator (2011) operated displaceably by means of conventional actuators against the thrusting action of resilient means from a fully open position into a fully closed position of the longitudinal delivery duct (106); and
**in that** said shaft (2010) of the **pre-regulation** thermostatic valve (2000) comprises a second obturator (2012) arranged downstream of the first obturator (2011) and able to be activated upon.recall of the said resilient means in order to cause closing of the delivery,
**and in that said second obturator (2012) has an outer diameter smaller than the inner diameter of the section (106a) of the longitudinal delivery duct (106) closed off so as to ensure the passage of a predefined flow of hot water (A).**

2. **Multifunction valve** according to Claim **1**, **characterized in that** the aperture (Lm) of the **first** longitudinal duct (106) for delivery to the mixer valve is equal to the aperture (Lr) of the **first** return duct (107) of the said mixer valve.

3. **Multifunction valve** according to Claim 1, **characterized in that** said first seat (104) for the first instrument (1000) for regulating the flowrate emerges inside a duct (104a), with a substantially vertical axis, connected to the delivery chamber (110) and to said branch (105) for connection to the return chamber (120).

4. **Multifunction valve** according to Claim 1, **characterized in that** said branch (105) for connecting together the delivery chamber (110) and the return chamber (120) communicates with exterior via two transverse and coaxial apertures (105a) respectively . formed on the opposite side faces (100b,100c) of the monobloc body (100).

5. **Multifunction valve** according to Claim 1, **characterized in that** said seats (104,138) for the instruments (1000,2000) for regulating the delivery of boiler water and regulating the water (A) for delivery to the mixer valve are arranged on the upper side (100d) of the monobloc.

6. Multifunction valve according to Claim 1, **characterized in that** said return chamber (120) for the cold water is connected to a return aperture (102a) of a hydraulic circuit (5,6) for recirculating the water to radiators.

7. Multifunction valve according to Claim 1 **characterized in that** the pre-regulation thermostatic valve (2000) is connected to a temperature sensor (3b) arranged on a delivery branch section (3) downstream of the mixing chamber (130).

8. Multifunction valve according to Claim 1, **characterized in that** it comprises a three-speed pump (3000) arranged between the delivery aperture (109) and the pipes (3) supplying the radiating panels.

9. Multifunction valve according to Claim 1, **characterized in that** it comprises a thermometer (4000) inserted in **corresponding aperture** (103) of the delivery chamber, a cap for closing **a second** aperture (103) and a cap for closing **an** aperture (102a) for return from a radiator supply circuit.

10. Multifunction valve according to Claim **1**, **characterized in that** it comprises a thermometer (4000) inserted in one of the two apertures (103) of the delivery chamber (110), and a connection to the delivery (5) and to the return (6) of a radiator supply circuit.

11. Multifunction valve according to Claim 1, **characterized in that** said delivery chamber (110) extends substantially in the vertical direction (Z-Z) and communicates with exterior via two transverse apertures (103), coaxially and respectively formed on opposite side faces (100b,100c) of the body (100).

12. Hydraulic circuit for supplying water to radiating panels, **characterized in that** it comprises at least one multifunction valve according to Claim **1** connected via the delivery aperture (101) and return aperture (102) on the upstream side to the risers for delivery (1) and return (2) of the water to/from the boiler and via the delivery aperture (109) and return aperture (111) on the downstream side to the pipes (3,4) for delivery/return to/from the radiating panels.

13. Hydraulic circuit according to Claim 12, **characterized in that** it comprises delivery/return branches (5,6) of a recirculating circuit for radiators which are connected to the multifunction valve via respective apertures (103,102a).

14. Hydraulic circuit according to Claim **12**, **characterized in that** it comprises a three-speed pump (3000) and a thermometer (3**b**) connected to the mixer valve for regulating the delivery of hot water (A) to the mixing chamber (130) of the mixer valve, arranged on the delivery branch section (3) of the radiating panel circuit.

15. Hydraulic circuit according to Claim **12**, **characterized in that** it comprises at least one float-type breather valve (3c) arranged on the delivery branch section (3) of the radiating panel circuit.

## Patentansprüche

1. Multifunktionsventil zum Zuführen und Steuern des Wassers (AB) für Abstrahlplatten, wobei es einen Monoblockkorpus (100) umfasst, wobei der Monoblockkorpus (100) umfasst:
- mindestens eine erste Zufuhröffnung (101), eine erste Rückführöffnung (102) für Einströmen/Ausströmen des Wassers, das zu/von den Steigleitungen für die Zufuhr/Rückfuhr des Kesselwassers (A) geht/kommt;
- mindestens eine zweite Zufuhröffnung (109) und eine zweite Rückführöffnung (111) für das Einströmen/Ausströmen des Wassers, das zu/von den Abstrahlplatten geht/kommt;
- einen ersten Sitz (104), der für den Eingriff mit einem ersten Instrument (1000) zum Regeln des Durchsatzes des aus der Steigleitung (1) des Kesselheißwassers (A) entnommenen Wassers geeignet ist;
- eine Mischkammer (130) eines Mischerventils zum Mischen des Zufuhrwassers (A) und des Rückfuhrwassers (B), um das der zweiten Zufuhröffnung (109) der Abstrahlplatten zugeführte Wasser (AB) bei der vorab festgelegten Temperatur zu halten;
- der Monoblockkorpus (100) weist darauf ausgebildet einen zweiten Sitz (138) auf, der zum Aufsetzen eines zweiten Instruments (2000) zum Regeln der Zufuhr von Heißwasser (A) zu der Mischkammer (130) geeignet ist,
wobei:
- die erste Zufuhröffnung (101) und die erste Rückfuhröffnung (102) für Einströmen/Ausströmen des Wassers in einer jeweiligen Zufuhrkammer (110) und Rückfuhrkammer (120), die mittels eines Zweigs (105) miteinander verbunden sind, herauskommen;
- der Zweig (105) mit einem ersten Längskanal für Zufuhr (106) und einem ersten Längskanal für Rückfuhr (107) jeweils zu/von der Mischkammer (130) verbunden ist;
wobei die Mischkammer (130) mit einem ersten Ende eines vertikalen Zufuhrkanals (131) verbunden ist, dessen anderes Ende mit einem Abschnitt (106a) des ersten Längskanals für Zufuhr (106) für das Heißwasser (A) und einem Zweig (137a) des ersten Längskanals (107) für die Rückfuhr des Kaltwassers (B), das durch die zweite Rückführöffnung (111) in den Ventilkorpus eindringt, verbunden ist;
wobei das Multifunktionsventil auch umfasst, dass das erste Instrument (1000) ein Durchflussmesser (1000) ist, der koaxial in den ersten Sitz (104) des Ventilkorpus eingesetzt ist;
wobei das Multifunktionsventil auch umfasst, dass das zweite Instrument (2000) ein Vorregelungsthermostatventil (2000) ist, das koaxial in den zweiten Sitz (138) des Korpus eingeführt ist und die Öffnung des Abschnitts (106a) des Längskanals (106) für die Zufuhr des Heißwassers (A) zu dem Mischkammerventil absperren kann, um eine größere/kleinere Öffnung des Kanals zu bewirken,
**dadurch gekennzeichnet, dass**
das Vorregelungsthermostatventil (2000) eine Welle (2010) umfasst, deren freies Ende (2010a) mindestens ein erstes Absperrorgan (2011) umfasst, das mittels herkömmlicher Aktoren gegen die Schubwirkung von elastischen Mitteln von einer vollständig offenen Stellung in eine vollständig geschlossene Stellung des Längszufuhrkanals (106) verlagerbar betätigt wird; und
dass die Welle (2010) des Vorregelungsthermostatventils (2000) ein zweites Absperrorgan (2012) umfasst, das stromabwärts des ersten Absperrorgans (2011) angeordnet ist und bei Abruf des elastischen Mittels aktiviert werden kann, um ein Schließen der Zufuhr hervorzurufen,
und dass das zweite Absperrorgan (2012) einen Außendurchmesser aufweist, der kleiner als der Innendurchmesser des Abschnitts (106a) des Längszufuhrkanals (106) ist, der abgesperrt wird, um das Passieren einer vorab festgelegten Strömung von Heißwasser (A) sicherzustellen.

2. Multifunktionsventil nach Anspruch 1, **dadurch gekennzeichnet, dass** die Öffnung (Lm) des ersten Längskanals (106) zur Zufuhr zu dem Mischerventil gleich der Öffnung (Lr) des ersten Rückfuhrkanals (107) des Mischerventils ist.

3. Multifunktionsventil nach Anspruch 1, **dadurch gekennzeichnet, dass** der erste Sitz (104) für das erste Instrument (1000) zum Regeln des Durchsatzes in einem Kanal (104a), mit einer im Wesentlichen vertikalen Achse, herauskommt, der mit der Zufuhrkammer (110) und dem Zweig (105) für die Verbindung mit der Rückfuhrkammer (120) verbunden ist.

4. Multifunktionsventil nach Anspruch 1, **dadurch gekennzeichnet, dass** der Zweig (105) zum Miteinanderverbinden der Zufuhrkammer (110) und der Rückfuhrkammer (120) mittels zweier querverlaufender und koaxialer Öffnungen (105a), die jeweils an den gegenüberliegenden Seitenflächen (100b, 100c) des Korpus (100) ausgebildet sind, mit außen in Verbindung steht.

5. Mehrfunktionsventil nach Anspruch 1, **dadurch gekennzeichnet, dass** die Sitze (104, 138) für die Instrumente (1000, 2000) zum Regeln der Zufuhr von Kesselwasser und Regeln des Wassers (A) zur Zufuhr zum Mischerventil an der oberen Seite (100d) des Monoblocks angeordnet sind.

6. Multifunktionsventil nach Anspruch 1, **dadurch gekennzeichnet, dass** die Rückfuhrkammer (120) für das Kaltwasser zum Rückführen des Wassers zu Radiatoren mit einer Rückfuhröffnung (102a) eines Hydraulikkreises (5, 6) verbunden ist.

7. Multifunktionsventil nach Anspruch 1, **dadurch gekennzeichnet, dass** das Vorregelungsthermostatventil (2000) mit einem Temperatursensor (3b), der an einem Zufuhrzweigabschnitt (3) stromabwärts der Mischkammer (130) angeordnet ist, verbunden ist.

8. Mehrfunktionsventil nach Anspruch 1, **dadurch gekennzeichnet, dass** es eine Pumpe mit drei Drehzahlen (3000) umfasst, die zwischen der Zufuhröffnung (109) und den Rohren (3), die die Abstrahlplatten versorgen, angeordnet ist.

9. Multifunktionsventil nach Anspruch 1, **dadurch gekennzeichnet, dass** es ein Thermometer (4000), das in eine entsprechende Öffnung (103) der Zufuhrkammer eingeführt ist, eine Kappe zum Verschließen einer zweiten Öffnung (103) und eine Kappe zum Verschließen einer Öffnung (102a) zur Rückfuhr von einem Radiatorzufuhrkreis umfasst.

10. Multifunktionsventil nach Anspruch 1, **dadurch gekennzeichnet, dass** es ein Thermometer (4000), das in eine der zwei Öffnungen (103) der Zufuhrkammer (110) eingeführt ist, und eine Verbindung mit der Zufuhr (5) und mit der Rückfuhr (6) eines Radiatorversorgungskreises umfasst.

11. Multifunktionsventil nach Anspruch 1, **dadurch gekennzeichnet, dass** sich die Zufuhrkammer (110) im Wesentlichen in der vertikalen Richtung (Z-Z) erstreckt und mittels zweiter querverlaufender Öffnungen (103), die koaxial und jeweils an gegenüberliegenden Seitenflächen (100b, 100c) des Korpus (100) ausgebildet sind, mit außen in Verbindung steht.

12. Hydraulikkreis zum Zuführen von Wasser zu Abstrahlplatten, **dadurch gekennzeichnet, dass** er mindestens ein Multifunktionsventil nach Anspruch 1 umfasst, das mittels der Zufuhröffnung (101) und Rückfuhröffnung (102) an der stromaufwärts liegenden Seite mit den Steigrohren zur Zufuhr (1) und Rückfuhr (2) des Wassers zu/von dem Kessel und mittels der Zufuhröffnung (109) und Rückfuhröffnung (111) an der stromabwärts liegenden Seite mit den Rohren (3, 4) zur Zufuhr/Rückfuhr zu/von den Abstrahlplatten verbunden ist.

13. Hydraulikkreis nach Anspruch 12, **dadurch gekennzeichnet, dass** er Zufuhr-/Rückfuhrzweige (5, 6) eines Rückfuhrkreises für Radiatoren umfasst, die mittels jeweiliger Öffnungen (103, 102a) mit dem Multifunktionsventil verbunden sind.

14. Hydraulikkreis nach Anspruch 12, **dadurch gekennzeichnet, dass** er eine Pumpe mit drei Drehzahlen (3000) und ein Thermometer (3b) umfasst, das mit dem Mischerventil zum Regeln der Zufuhr von Heißwasser (A) zu der Mischkammer (130) des Mischerventils angeordnet an dem Zufuhrzweigabschnitt (3) des Abstrahlplattenkreises verbunden ist.

15. Hydraulikkreis nach Anspruch 12, **dadurch gekennzeichnet, dass** er mindestens ein schwimmerartiges Atmungsventil (3c) umfasst, das an dem Zufuhrzweigabschnitt (3) des Abstrahlplattenkreises angeordnet ist.

## Revendications

1. Valve multifonctions pour alimenter et commander l'eau (AB) pour des panneaux de radiateur, ladite valve comprenant un corps monobloc (100), ledit corps monobloc (100) comprenant :
- au moins une première ouverture de fourniture (101), une première ouverture de retour (102) pour l'entrée/la sortie de l'eau allant vers/venant des colonnes pour la fourniture/le retour de l'eau de la chaudière (A) ;
- au moins une seconde ouverture de fourniture (109) et une seconde ouverture de retour (111) pour l'entrée/la sortie de l'eau allant vers/venant des panneaux de radiateur,
- un premier emplacement (104) approprié pour un engagement avec un premier instrument (1000) pour réguler le débit de l'eau tirée de la colonne (1) d'eau chaude de la chaudière (A) ;
- une chambre de mélange (130) d'une valve de mélange pour mélanger l'eau fournie (A) et l'eau de retour (B) de manière à maintenir à la température prédéfinie l'eau (AB) alimentée à la seconde ouverture de fourniture (109) des panneaux de radiateur,
- ledit corps monobloc (100) comporte, formé sur lui-même, un second emplacement (138) approprié pour loger un second instrument (2000) destiné à réguler la fourniture d'eau chaude (A) vers ladite chambre de mélange (130),
dans laquelle :
- ladite première ouverture de fourniture (101) et ladite première ouverture de retour (102) pour l'entrée/la sortie de l'eau émergent à l'intérieur d'une chambre de fourniture (110) et d'une chambre de retour (120) respective, qui sont connectées ensemble au moyen d'une ramification (105) ;
- ladite ramification (105) est connectée à un premier conduit longitudinal pour la fourniture (106) et à un second conduit longitudinal pour le retour (107), respectivement, vers/depuis ladite chambre de mélange (130) ;
ladite chambre de mélange (130) étant connectée à une première extrémité d'un conduit de fourniture vertical (131), dont l'autre extrémité est connectée à une section (106a) du premier conduit longitudinal pour la fourniture (106) pour l'eau chaude (A) et à une ramification (137a) du premier conduit longitudinal (107) pour le retour de l'eau froide (B) qui entre dans le corps de valve via ladite seconde ouverture de retour (111) ;
ladite valve multifonctions comprenant également ledit premier instrument (1000) qui est un débitmètre (1000) inséré coaxialement dans ledit premier emplacement (104) du corps de valve ;
ladite valve multifonctions comprenant également ledit second instrument (2000) qui est une valve thermostatique de pré-régulation (2000) insérée coaxialement dans ledit second emplacement (138) dudit corps et capable de fermer l'ouverture de ladite section (106a) du conduit longitudinal (106) pour fourniture de l'eau chaude (A) à la valve à chambre de mélange de manière à provoquer une ouverture plus grande/plus petite dudit conduit,
**caractérisée en ce que**
ladite valve thermostatique de pré-régulation (2000) comprend une tige (2006), dont l'extrémité libre (2010a) comprend au moins un premier obturateur (2011) actionné en déplacement au moyen d'actionneurs traditionnels à l'encontre de l'action de poussée de moyens élastiques depuis une position totalement ouverte jusque dans une position totalement fermée du conduit de fourniture longitudinal (106) ; et
**en ce que** ladite tige (2006) de la valve thermostatique de pré-régulation (2000) comprend un second obturateur (2012) agencé en aval du premier obturateur (2011) et capable d'être activé lors du rappel desdits moyens élastiques afin de provoquer la fermeture de la fourniture,
et **en ce que** ledit second obturateur (2012) a un diamètre extérieur plus petit que le diamètre intérieur de la section (106a) du conduit de fourniture longitudinal (106) ferme de manière à assurer le passage d'un débit prédéfini d'eau chaude (A).

2. Valve multifonctions selon la revendication 1, **caractérisée en ce que** l'ouverture (Lm) du premier conduit longitudinal (106) pour la fourniture à la valve de mélange est égale à l'ouverture (Lr) du premier conduit de retour (107) de ladite valve de mélange.

3. Valve multifonctions selon la revendication 1, **caractérisée en ce que** ledit premier emplacement (104) pour le premier instrument (1000) pour réguler le débit émerge à l'intérieur d'un conduit (104a), avec un axe sensiblement vertical, connecté à la chambre de fourniture (110) et à ladite ramification (105) pour une connexion à la chambre de retour (120).

4. Valve multifonctions selon la revendication 1, **caractérisée en ce que** ladite ramification (105) pour connecter ensemble la chambre de fourniture (110) et la chambre de retour (120) communique avec l'extérieur via deux ouvertures transversales et coaxiales (105a) formées respectivement sur les faces latérales opposées (100b, 100c) du corps (100).

5. Valve multifonctions selon la revendication 1, **caractérisée en ce que** lesdits emplacement (104, 138) pour les instruments (1000, 2000) pour réguler la fourniture d'eau de la chaudière et réguler l'eau (A) pour la fourniture à la valve de mélange sont agencés sur le côté supérieur (100b) du corps.

6. Valve multifonctions selon la revendication 1, **caractérisée en ce que** ladite chambre de retour (120) pour l'eau froide est connectée à une ouverture de retour (102a) d'un circuit hydraulique (5, 6) pour faire recirculer l'eau vers les radiateurs.

7. Valve multifonctions selon la revendication 1, **caractérisée en ce que** la valve thermostatique de pré-régulation (2000) est connectée à un capteur de température (3b) agencé sur une section ramifiée de fourniture (3) en aval de la chambre de mélange (130).

8. Valve multifonctions selon la revendication 1, **caractérisée en ce qu'**elle comprend une pompe à trois vitesses (3000) agencée entre l'ouverture de fourniture (109) et les tubes (3) qui alimentent les panneaux de radiateurs.

9. Valve multifonctions selon la revendication 1, **caractérisée en ce qu'**elle comprend un thermomètre (4000) inséré dans une ouverture correspondante (103) de la chambre de fourniture, un capuchon pour fermer une seconde ouverture (103) et un capuchon pour fermer une ouverture (102a) pour le retour depuis un circuit d'alimentation de radiateur.

10. Valve multifonctions selon la revendication 1, **caractérisée en ce qu'**elle comprend un thermomètre (4000) inséré dans l'une des deux ouvertures (103) de la chambre de fourniture (110), et une connexion à la fourniture (5) et au retour (6) d'un circuit d'alimentation de radiateur.

11. Valve multifonctions selon la revendication 1, **caractérisée en ce que** ladite chambre de fourniture (110) s'étend sensiblement dans la direction verticale (Z-Z) et communique avec l'extérieur via deux ouvertures transversales (103) formées coaxialement et respectivement sur des faces latérales opposées (100b, 100c) du corps (100).

12. Circuit hydraulique pour alimenter de l'eau à des panneaux de radiateur, **caractérisé en ce qu'**il comprend au moins une valve multifonctions selon la revendication 1, connectée via l'ouverture de fourniture (101) et l'ouverture de retour (102) sur le côté amont des colonnes pour la fourniture (101) et le retour (2) de l'eau vers et depuis la chaudière, et via l'ouverture de fourniture (109) et l'ouverture de retour (111) sur le côté aval vers les tubes (3, 4) pour la fourniture/le retour vers/depuis les panneaux de radiateur.

13. Circuit hydraulique selon la revendication 12, **caractérisé en ce qu'**il comprend des ramifications de fourniture/retour (5, 6) d'un circuit de recirculation pour des radiateurs qui sont connectées à la valve multifonctions via des ouvertures respectives (103, 102a).

14. Circuit hydraulique selon la revendication 12, **caractérisé en ce qu'**il comprend une pompe à trois vitesses (3000) et un thermomètre (3b) connecté à la valve de mélange pour réguler la fourniture d'eau chaude (A) à la chambre de mélange (130) de la valve de mélange, agencé sur la section de ramification de fourniture (3) du circuit des panneaux de radiateur.

15. Circuit hydraulique selon la revendication 12, **caractérisé en ce qu'**il comprend au moins une valve de purge (3c) du type à flotteur, agencée sur la section de ramification de fourniture (3) du circuit des panneaux de radiateur.
